# EUROPÄISCHE PATENTSCHRIFT

(11) **EP 0 670 257 B1**
(45) Veröffentlichungstag und Bekanntmachung des Hinweises auf die Patenterteilung: **01.04.1998**
(21) Anmeldenummer: 95810097.6
(22) Anmeldetag: 15.02.1995
(51) Int. Cl.: B62D 29/04, B62D 27/02, B62D 25/14

(54) **Leichtbaufahrzeug**
Lightweight vehicle
Véhicule léger

(30) Priorität: 24.02.1994 EP 94810117
(43) Veröffentlichungstag der Anmeldung: 06.09.1995
(73) Patentinhaber: Horlacher, Max, CH-4313 Möhlin (CH)
(72) Erfinder: Horlacher, Max, CH-4313 Möhlin (CH)

(56) Entgegenhaltungen:
- BE-A- 679 917
- DE-C- 858 506
- DE-U- 8 807 208
- GB-A- 510 924
- GB-A- 1 209 714
- US-A- 4 664 974
- US-A- 5 100 494

## Beschreibung

Die Erfindung betrifft ein Leichtbaufahrzeug gemäss dem Oberbegriff des Anspruchs 1 und eine entsprechende selbsttragende Karosserie gemäss dem Oberbegriff des Anspruchs 14.

Leichtbaufahrzeuge werden vor allem wegen ihres geringen Energieverbrauchs immer populärer. In erster Linie handelt es sich dabei um Elektromobile, jedoch sind auch mit Verbrennungsmotoren oder Hybridantrieben ausgestattete Leichtbaufahrzeuge dieser Art schon bekannt.

Selbsttragende Kunststoffkarosserien für Leichtbaufahrzeuge werden heute, wenn man von einzelnen Spezialkonstruktionen absieht, in der Regel im klassischen Laminierverfahren hergestellt. Die Karosserie setzt sich dabei aus mehr oder weniger grossen laminierten Einzelteilen zusammen, die ebenfalls in Laminiertechnik miteinander verbunden werden. Die Herstellung von Fahrzeugkarosserien auf diese Art erfolgt weitestgehend manuell und ist nicht für die Serienfertigung geeignet. Ausserdem werden dabei meist nur aus dem Metallbau bekannte klassische Konstruktionsprinzipien mit den Mitteln der Kunststofftechnik nachempfunden, ohne von den speziellen Möglichkeiten der Kunststofftechnologie Gebrauch zu machen.

Ein typischer Vertreter einer nach solchen herkömmlichen Prinzipien hergestellten selbsttragenden Kunststoff-Karosserie ist in der DE-U-88 07 208 (Deutsches Gebrauchsmuster Nr. G 88 07 208.8, bekanntgemacht am 22. Sept. 1988) gezeigt und beschrieben. Die dort geoffenbarte Omnibus-Karosserie besteht aus zwei miteinander verbundenen Halbschalen aus einem Kunststoffverbundmaterial mit Sandwich-Struktur, welches eine mittlere Schaumstoffkernschicht umfasst, auf der beidseits faserverstärkte Kunststoffschichten auflaminiert sind. Die Trennebene zwischen den beiden Halbschalen verläuft durch die Längsmittelebene der Karosserie. Jede Halbschale ist aus einem Vorderteil und einem Hinterteil aufgebaut, wobei zwischen diesen eine unterschiedliche Anzahl von Zwischenteilen eingesetzt und untereinander und mit dem Vorderteil und dem Hinterteil fest verbunden sind. Bezüglich der Verbindung der einzelnen Teile untereinander ist lediglich ausgesagt, dass diese längs der Stosslinien mittels eines aushärtenden Kunststoffharzes erfolge.

Das Dokument DE-U-88 07 208 allein vermittelt in vielen Punkten keine konkrete Lehre und muss daher im Zusammenhang mit dem Wissensstand des Fachmanns gesehen werden, wie er sich insbesondere z.B. aus einem öffentlichen Vortrag ergibt, der anlässlich der am 15. und 16. März 1989 stattgefundenen Tagung des VDI (Verein Deutscher Ingenieure) in Mannheim, Deutschland vom damaligen Chefkonstrukteur des Anmelders der DE-U-88 07 208 gehalten wurde. Der mit "Metroliner in Carbondesign, Konzeption des Linienfahrzeugs" betitelte Vortrag, der im übrigen in komprimierter Form im Handbuch der VDI-Tagung Mannheim, VDI-Verlag GmbH, Düsseldorf, 1989, druckschriftlich veröffentlicht ist, befasste sich ausführlich mit der Entwicklung und Herstellung genau der in der DE-U-88 07 208 beschriebenen Omnibus-Karosserie.

Gemäss den Ausführungen dieses Vortrags erfolgt der Aufbau der Karosserie in einer aus zwei symmetrischen Halbschalen bestehenden Negativform, die zwecks Belegung geöffnet wird. Die Negativform ist modular aufgebaut und kann durch Einsetzen einer mehr oder weniger grossen Anzahl von Mittelteilen auf unterschiedliche Längen eingestellt werden, so dass sich unterschiedlich lange Karosserien herstellen lassen. Die beiden Halbschalen werden innen mit Fasergelegen (Verstärkungsfasern), der Schaumstoffkernschicht und weiteren Fasergelegen (Verstärkungsfasern) belegt. Einbauteile wie Radkasten, Heckbank etc. werden in separaten Formen vorbereitet. Im Vakuumverfahren werden dann (immer noch jede Formhälfte für sich) Aussenhaut, Füllmaterial (Schaumstoffkernschicht) und Innenwand miteinander verpresst, so dass sich das faserverstärkte Kunststoffverbundmaterial ergibt. Daraufhin werden die vorgefertigten Einbauteile in die so hergestellten Karosseriehälften eingesetzt und mit diesen durch Laminiertechnik verbunden. Die beiden Negativformhälften werden dann aufgestellt und die Negativform wird geschlossen. Danach werden die beiden Karosseriehälften in der Form miteinander verklebt, wobei dies in herkömmlicher Weise mittels Laminiertechnik, d.h. durch Auflaminieren von Fasergelegen über die Stossfuge der zu verbindenden Teile erfolgt. Nach dem Aushärten der Verklebung der beiden Karosseriehälften wird die Negativform geöffnet und die fertige Karosserie entformt. Nach dem Entformen werden auch noch an der Aussenseite der Karosserie Fasergelege über die Stossfuge laminiert.

Die beiden jeweils einstückig hergestellten Karosseriehälften können nicht je für sich entformt werden, weil sie aufgrund ihrer Abmessungen (maximale Wandstärke 50 mm bei 8 und mehr Meter Länge) nicht ausreichend eigensteif (formstabil) wären und daher ein passgenaues Zusammenfügen ausserhalb der Negativform praktisch nicht machbar wäre. Der Aufbau der in dem genannten Vortrag erläuterten bzw. in der diesem zugrundeliegenden DE-U-88 07 208 beschriebenen Omnibus-Karosserie setzt also zwingend die Verwendung einer Negativform voraus, welche von Hand belegt werden muss. Diese Bauweise und insbesondere die dabei eingesetzte Laminiertechnik sind zwar für relativ geringe Stückzahlen, nicht jedoch für eine rationelle Serienfertigung in grossen Stückzahlen geeignet.

Das Dokument BE-A-679 917 zeigt einen Kastenaufbau aus faserverstärktem Kunststoffverbundmaterial für einen Eisenbahnwagon, wobei der Kastenaufbau dazu bestimmt ist, auf einem Fahrgestell montiert zu werden, also keine selbsttragende Karosserie ist. Der Kastenaufbau besteht aus langgestreckten, im wesentlichen plattenförmigen, ebenen oder abgewinkelten vorgefertigten Elementen, welche den Boden, die Seitenwände und das Dach des Kastens bilden, sowie aus zwei weiteren vorgefertigten, im wesentlichen kapellenförmigen Elementen, welche die beiden stirnseitigen Enden des Kastens bilden. Die Elemente bestehen aus faserverstärktem Kunststoff mit eingebetteten Versteifüngsstäben aus separat ausgehärtetem Kunststoff. Die einzelnen Elemente sind untereinander längs ihrer Begrenzungskanten verbunden. Die Verbindung erfolgt in Laminiertechnik, wobei Verstärkungsfasern jeweils des einen zu verbindenden Elements über die Verbindungsfuge hinweg auf das andere zu verbindende Element ragen und umgekehrt. Zusätzlich sind sich durch die Stossfugen zwischen den zu verbindenden Elementen erstreckende, die beiden Seiten der Elemente verbindende weitere Verstärkungsfasern vorgesehen, welche die Festigkeit der Verbindung erhöhen. Das Zusammenfügen der einzelnen Elemente des Kastenaufbaus und insbesondere die Verbindung derselben untereinander durch Laminieren ist sehr aufwendig und ebenfalls nicht für eine rationelle Serienfertigung geeignet.

Das Dokument GB-A-1 209 714 offenbart eine selbsttragende Automobilkarosserie aus Integralkunststoffschaum, welche aus nur zwei Teilen, und zwar einem Unterbau (Chassis) und einem Oberbau (Fahrgastzelle) zusammengesetzt ist. Der Oberbau stützt sich mittels spezieller Tragrippen auf entsprechenden Auflageflächen des Unterbaus ab und ist mit diesem verklebt. Die Steifigkeit und Festigkeit der Karosserie wird im wesentlichen durch in die Kunststoffteile integrierte Verstärkungsrohre erreicht, welche gleichzeitig auch als Kabeltunnels und dgl. dienen können. Diese bekannte Karosserie orientiert sich an den Konstruktionsprinzipien des klassischen Automobilbaus, ist aufgrund ihrer Zweiteiligkeit für die Serienfertigung schlecht geeignet, wird dem heute hochentwickelten Werkstoff faserverstärkter Kunststoff nur in unzureichendem Masse gerecht und hat sich deshalb in der Praxis nie durchgesetzt.

Durch die vorliegende Erfindung soll nun ein neues Konstruktionsprinzip für ein Leichtbaufahrzeug mit selbsttragender Kunststoffkarosserie bereitgestellt werden, welches dem Werkstoff faserverstärkter Kunststoffbesser gerecht wird, seine speziellen Möglichkeiten besser ausnützt und eine rationelle Serienfertigung der Karosserie und damit des gesamten Leichtbaufahrzeugs zulässt.

Das dieser Aufgabenstellung gerecht werdende erfindungsgemässe Leichtbaufahrzeug ist durch die Merkmale des Anspruchs 1 gekennzeichnet. Die entsprechende erfindungsgemässe Karosserie ist gekennzeichnet durch die Merkmale des Anspruchs 14.

Durch die Aufteilung der Karosserie in mehrere (kleinere) Karosserie-Elemente können diese problemlos formstabil und vor allem im Rahmen einer industriellen Serienproduktion hergestellt werden. Durch die formstabile (eigensteife) Ausbildung der vorgefertigten Karosserie-Elemente entfällt wiederum die Notwendigkeit einer Negativ-Form beim Zusammenfügen der einzelnen Elemente. Durch die grossflächige Verbindung, insbesondere Verklebung und ggf. zusätzliche oder alternative formschlüssige Verbindung der einzelnen Karosserie-Elemente auf Stoss wird ein Aufbau nach Art eines Gewölbes oder eines Iglus (Blockbauweise) erreicht, welcher der Karosserie eine besondere Stabilität verleiht.

Durch die Kastenstruktur der einzelnen Karosserie-Elemente bilden die miteinander verbundenen, insbesondere verklebten Grenzbereiche der Karosserie-Elemente eine festigkeitserhöhende Struktur nach Art eines I- oder T-Trägers, welche in vorteilhafter Weise in die Gesamtkonstruktion einbezogen werden kann. So lassen sich die festigkeitserhöhend wirkenden verbundenen, insbesondere verklebten Stossflächen der Karosserie-Elemente in Zonen erhöhten Festigkeitsbedarfs und/oder erhöhten Impaktrisikos legen, so dass die Karosserie gerade an den kritischen Stellen besonders stabil ist.

Weitere zweckmässige Ausgestaltungen und Vorteile des erfindungsgemässen Leichtbaufahrzeugs ergeben sich aus den abhängigen Ansprüchen und der nachfolgenden Beschreibung in Verbindung mit der Zeichnung. In dieser zeigen:
- Fig. 1 und 1a: die Karossierie eines ersten Ausführungsbeispiels eines erfindungsgemässen Leichtbaufahrzeugs in explodierter Darstellung der einzelnen Karosserie-Elemente, aus denen die Karosserie zusammengesetzt ist, bzw. in zusammengesetztem Zustand,
- Fig. 2: eine explodierte Ansicht der Karosserie eines zweiten Ausführungsbeispiels eines erfindungsgemässen Leichtbaufahrzeugs,
- Fig. 2a: eine Gesamtansicht eines Leichtbaufahrzeugs mit einer Karosserie gemäss Fig.2,
- Fig. 3: einen Querschnitt durch ein Karosserie-Element gemäss der Linie III-III in Fig.1,
- Fig. 4: eine Prinzip-Skizze zur Erläuterung eines Herstellungsverfahrens für Karosserie-Elemente,
- Fig. 5-7: je einen Querschnitt durch die miteinander verklebten Grenzbereiche von zwei benachbarten Karosserie-Elementen mit unterschiedlich ausgestalteten Grenzbereichen,
- Fig. 8: eine Draufsicht auf einen Ausschnitt einer Stoss- bzw. Klebefläche eines Karosserie-Elements,
- Fig. 9: einen Schnitt durch ein speziell ausgebildetes Karosserie-Element gemäss der Linie IX-IX in Fig.1,
- Fig. 10: einen Schnitt durch eine Detailvariante der Frontpartie des Leichtbaufahrzeugs analog Linie IX-IX der Fig.1,
- Fig. 11: einen Ausschnitt aus einem speziell ausgebildeten Schaumstoffkern und
- Fig. 12 und 13: je einen Querschnitt durch die miteinander verklebten Grenzbereiche von zwei benachbarten Karosserie-Elementen mit formschlüssig verbundenen Grenzbereichen.

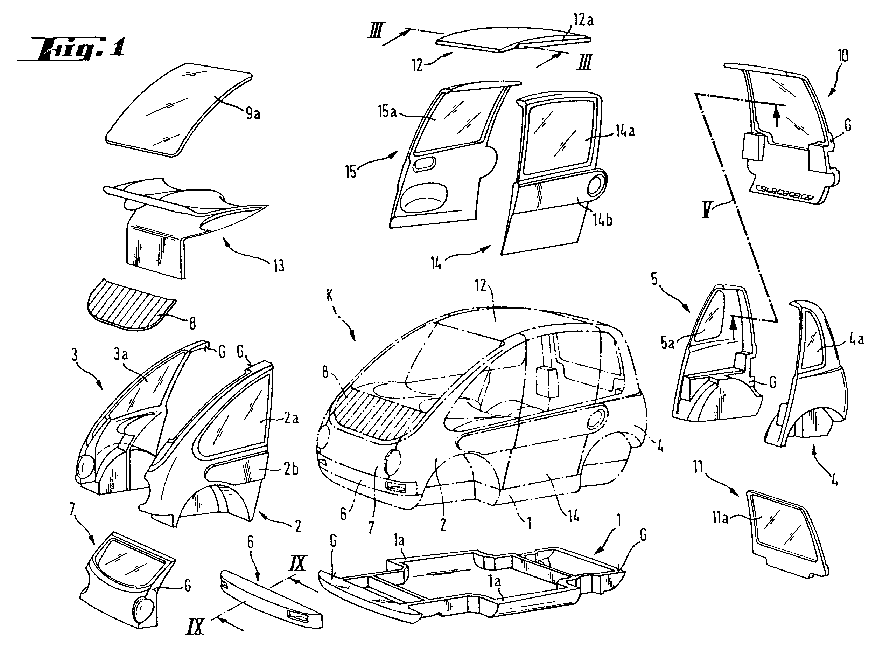

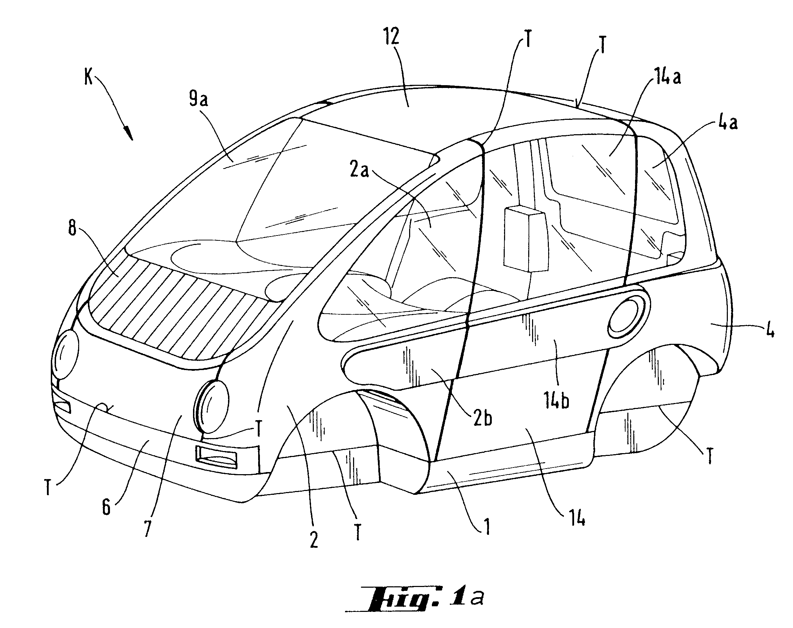

Die im Zentrum der Fig.1 im zusammengesetzten Zustand gezeigte Karossierie K besitzt eine im wesentlichen Ei-förmige Gestalt. Sie ist aus einzelnen Karosserie-Elementen zusammengesetzt, die miteinander grossflächig auf Stoss verklebt sind. Die einzelnen Karosserie-Elemente sind hier eine Bodenwanne 1, zwei vordere Seitenelemente 2 und 3 mit eingeklebten Seitenscheiben 2a und 3a, zwei hintere Seitenelemente 4 und 5 mit eingeklebten Seitenscheiben 4a und 5a, ein Stossfänger 6, ein Frontelement 7, eine Frontabdeckung 8, eine Windschutzscheibe 9a, ein Heckelement 10, ein Heckscheibenelement 11 mit eingeklebter Heckscheibe 11a, ein Dachelement 12, ein Ablageelement 13 und zwei Schiebetüren 14 und 15 mit eingeklebten Seitenscheiben 14a und 15a. Mit Ausnahme der beiden Schiebetüren 14 und 15 sind alle Karosserie-Elemente 1-13 fest miteinander verklebt.

Ein wesentliches Prinzip des erfindungsgemässen Leichtbaufahrzeugs besteht darin, dass die einzelnen Karosserie-Elemente nach Art eines Gewölbes oder Iglus zusammengefügt sind, was der Karosserie im zusammengesetzten Zustand eine hohe Stabilität und Impakt-Festigkeit verleiht. Da die einzelnen vorgefertigten Karosserie-Elemente bereits für sich alleine eigensteif (formstabil) sind, lassen sie sich ohne Zuhilfenahme von Schablonen oder Negativ-Formen passgenau zusammenfügen.

Mit Ausnahme der eingeklebten Front-, Seiten- und Heckscheiben bestehen alle Karosserie-Elemente 1-15 aus faserverstärktem Kunststoff, wobei, wie aus der Zeichnung ersichtlich, alle für die Unterbringung der üblichen Fahrzeugkomponenten (Motor, Batterien, Scheinwerfer, Räder, Einbauten, Innenausstattung etc.) erforderlichen Hohlräume, Nischen, Vorsprünge, Befestigungspunkte etc. bereits in die einzelnen Karosserie-Elemente integriert sind.

Gemäss einem weiteren wesentlichen Aspekt der Erfindung weisen die Karosserie-Elemente als Ganzes oder wenigstens in ihren an die benachbarten Karosserie-Elemente angrenzenden Randbereichen eine Kastenstruktur mit einem leichten und relativ weichen Schaumstoffkern und einem diesen umschliessenden, relativ festen und vorzugsweise faserverstärkten Kunststoffmantel auf. Durch diese Kastenstruktur wird bei geringstem Gewicht eine sehr hohe Festigkeit und Stabilität der einzelnen Karosserie-Elemente erreicht.

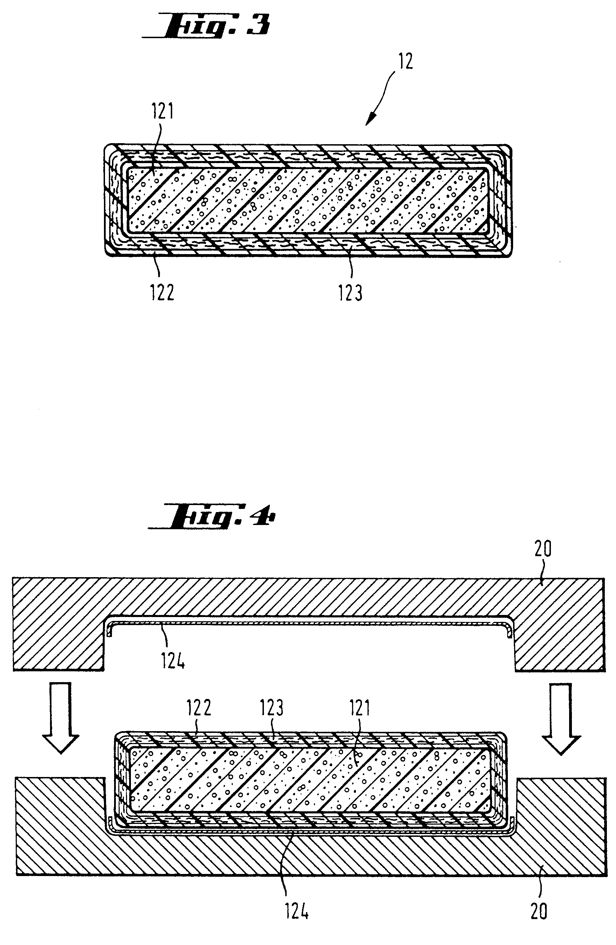

Die Fig.3 veranschaulicht den Kastenstruktur-Aufbau der Karosserie-Elemente am Beispiel des Dachelements 12. Der Schaumstoffkern 121 besteht aus einem leichten Schaumstoff, vorzugsweise Polystyrol oder dergleichen. Der den Schaumstoffkern 121 umschliessende Mantel 122 besteht aus Polyurethan oder vorzugsweise einem Epoxidharzsystem. Im Mantel 122 sind je nach Bedarf Glas-, Kohle- oder andere hochfeste Verstärkungsfasern 123 eingebettet. Menge und Anordnung der Verstärkungsfasern 123 richten sich nach den erforderlichen Festigkeitseigenschaften des jeweiligen Karosserie-Elements und sind in an sich bekannter Weise den jeweiligen Bedürfnissen angepasst.

Die einzelnen Karosserie-Elemente sind, wie aus der Zeichnung hervorgeht, relativ kompliziert geformt und weisen in sich unterschiedliche Wandstärken (Dicken) auf. Es versteht sich, dass in Bereichen relativ geringer Wandstärken der Schaumstoffkern sehr dünn ausgebildet ist oder sogar ganz fehlen kann. In diesen Bereichen besteht die genannte Kastenstruktur dann praktisch bzw. ausschliesslich nur noch aus dem faserverstärkten Kunststoffmantel.

Die Herstellung der einzelnen Karosserie-Elemente kann nach an sich bekannten Verfahren erfolgen. Bevorzugte Verfahren sind das sog. RTM-Verfahren (Resin Transfer Moulding) und das weiter unten noch näher beschriebene Umschäumungsverfahren.

Beim RTM-Verfahren wird der mit den Verstärkungsfasern belegte Schaumstoffkern in eine erwärmte Form eingelegt, in der sich im Bedarfsfall auch eine Einlage befinden kann, welche später die Oberfläche des fertigen Karosserie-Elements bildet. Dann wird die Form evakuiert und gleichzeitig in diese ein härtbares Kunststoffsystem eingesaugt, welches die Verstärkungsfasern imprägniert und den Schaumstoffkern umhüllt. Dieses Kunststoffsystem wird dann in der Form unter Anwendung von Wärme ausgehärtet, wobei es sich mit dem Schaumstoffkern und ggf. mit der Einlage verbindet und einen festen geschlossenen Mantel um den Schaumstoffkern bildet.

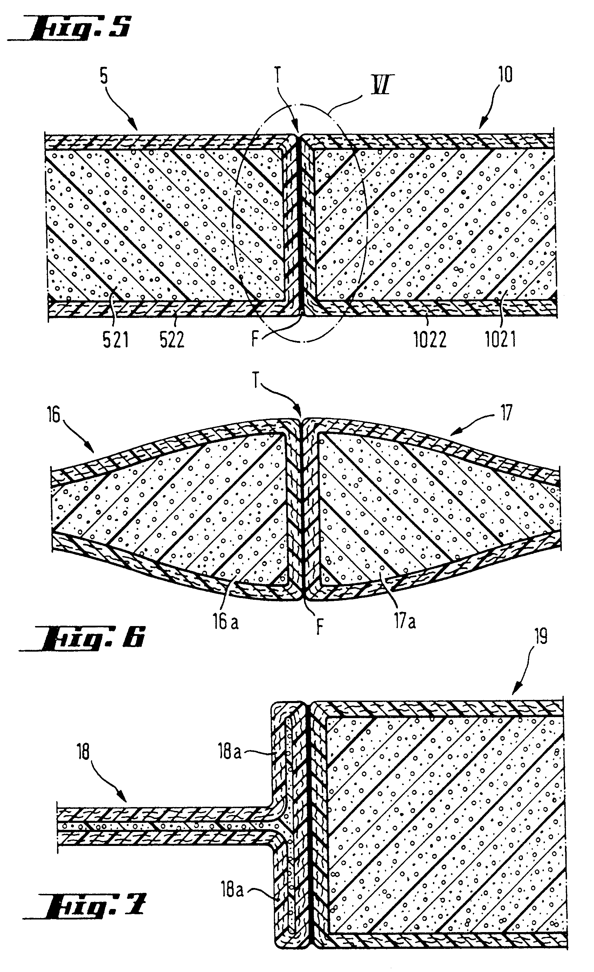

Das genannte Umschäumungsverfahren ist in Fig.4 skizziert. Hierbei wird eine in der Regel zweiteilige geheizte Form 20, deren Kavität im geschlossenen Zustand exakt der (negativen) Gestalt des herzustellenden Karosserie-Elements entspricht, zunächst mit einer Auskleidung 124 versehen, welche später die Oberfläche des fertigen Karosserie-Elements bildet. Diese Auskleidung kann z.B. eine eingelegte Folie oder eine aufgespritzte Kunststofflackschicht sein. Es versteht sich, dass die Auskleidung an der Form nicht haften darf; ggf. muss in an sich bekannter Weise vorher ein Trennmittel auf die Forminnenfläche aufgebracht werden.

Danach wird der mit Verstärkungsfasern 123 belegte Schaumstoffkern 121, vorzugsweise ein Polystyrol-Kern, und ein schäumbares (expandierendes) Kunststoffsystem, insbesondere ein expandierendes Epoxidharzsystem 122 in die Form 20 eingebracht und die Form geschlossen. Die Einbringung des expandierenden Kunststoffsystems kann z.B. derart erfolgen, dass der mit den Verstärkungsfasern 123 belegte Schaumstoffkern 121 ausserhalb der Form 20 mit dem Kunststoffsystem umspritzt und dann in die Form eingelegt wird. Alternativ kann das Kunststoffsystem auch zuerst z.B. in die untere Formhälfte appliziert, dann der Schaumstoffkern eingelegt und schliesslich das restliche Kunststoffsystem auf den eingelegten Schaumstoffkern aufgebracht werden.

Nach dem Schliessen der Form 20 beginnt das den Schaumstoffkern 121 umhüllende Kunststoffsystem unter dem Einfluss der Formwärme zu expandieren und auszuhärten, wobei es sämtliche Formhohlräume lückenlos ausfüllt. Insbesondere wird durch die Verwendung eines expandierenden Kunststoffsystems eine einwandfreie Imprägnierung der Verstärkungsfasern 123 und eine optimale Verbindung mit dem Schaumstoffkern 121 sowie mit der ggf. vorhandenen Auskleidung 124 erreicht. Es versteht sich, dass die Menge des in die Form eingebrachten expandierenden Kunststoffsystems unter Berücksichtigung der durch das Aufschäumen bewirkten Volumenszunahme ausreichend bemessen sein muss, um eine vollständige Ausfüllung aller Formhohlräume zu gewährleisten. Im allgemeinen ist der Schaumstoffkern 121 etwas kleiner als die Formkavität. Falls der Schaumstoffkern 121 etwas kompressibel ist, was z.B. bei Polystyrol der Fall ist, kann er aber auch etwas grösser als die Formkavität bemessen sein. Er wird dann beim Schliessen der Form leicht zusammengedrückt, was die gleichmässige Verteilung des umschliessenden Kunststoffsystems begünstigt und eventuell einen kompakteren Kunstoffmantel 122 ergibt.

Wie aus der Fig.9, welche einen Schnitt durch den Stossfänger 6 der Fig.1 zeigt, hervorgeht, kann der Schaumstoffkern auch aus zwei oder mehreren Einzelstücken 121a, 121b und 121c bestehen, wobei die Aufteilung in mehrere Einzelstücken alternativ oder zusätzlich auch in der anderen, hier senkrecht zur Zeichenebene stehenden Richtung bzw. Dimension erfolgen kann. Durch die Aufteilung des Schaumstoffkerns in Einzelstücke entstehen beim Umschäumen gemäss obigem Verfahren Brücken oder Stege 122a und 122b aus dem selben expandierenden Material wie die Ummantelung 122. Diese Stege können bewusst in die Konstruktion mit einbezogen und so gelegt werden, dass sie zur Verstärkung bzw. Versteifung der Kastenstruktur und damit des Karosserie-Elements selbst und letzten Endes auch der Gesamtkarosserie beitragen.

Nach dem Aushärten des Kunststoffsystems 122 wird die Form geöffnet und das fertige Karosserie-Element entnommen.

Das genannte Umschäumungsverfahren ist gleichermassen auch zur Herstellung von Karosserie-Elementen ohne Schaumstoffkern bzw. von Karosserie-Elementen, die nicht in allen Bereichen einen Schaumstoffkern aufweisen, geeignet. In diesem Fall werden - abgesehen von der eventuellen Auskleidung - eben nur die Verstärkungsfasern in die Form bzw. in die entsprechenden Bereiche der Form eingelegt, alle übrigen Verfahrensschritte sind gleich.

Das genannte Umschäumungsverfahren ist besonders gut zur Serien-Fertigung geeignet und lässt sich relativ einfach automatisieren. Ein weiterer Vorteil dieses Verfahrens besteht darin, dass die danach hergestellten Karosserie-Elemente bereits eine definitive Oberfläche aufweisen, die keiner Nachbearbeitung (z.B. Lackierung) mehr bedarf. Weitere Details dieses an sich z.B. für die Herstellung von Surf-Brettern bekannten und bewährten Umschäumungsverfahrens sowie geeignete und bevorzugte expandierende Kunststoffsysteme gehen z.B. aus der europäischen Patentschrift EP-B-0 069 076 hervor.

Wie schon erwähnt, sind die einzelnen Karosserie-Elemente nach Art eines Gewölbes oder Iglus zusammengefügt, wobei sie sich gegenseitig abstützen und so in ihrer Gesamtheit der Karosserie eine besonders hohe Stabilität verleihen. Die einzelnen Karosserie-Elemente sind grossflächig auf Stoss miteinander verklebt. Unter grossflächig wird dabei verstanden, dass die Breite der verklebten Stösse bzw. Grenzflächen wenigstens einen bis mehrere Zentimeter beträgt. Die in den Figuren der Zeichnung sichtbaren, als Klebflächen dienenden Stösse bzw. Grenzflächen der einzelnen Karosserie-Elemente sind einheitlich mit G bezeichnet. Die aus der Aufteilung der Karosserie in die einzelnen Karosserie-Elemente resultierenden Trennflächen zwischen den einzelnen Karosserie-Elementen tragen, soweit in der Zeichnung sichtbar, das Bezugszeichen T.

Um die genannte grossflächige Stoss-Verbindung der einzelnen Karosserie-Elemente zu erreichen, sind diese gemäss einem weiteren wesentlichen Gedanken der Erfindung entweder insgesamt oder wenigstens im Bereich ihrer verbundenen Grenzflächen relativ dickwandig ausgebildet oder mit einem breiteren Verbindungs- bzw. Klebeflansch versehen.

Die Fig.5 zeigt einen Schnitt durch eine typische Klebverbindung von zwei Karosserie-Elementen, wie sie etwa in dem in Fig.1 mit V bezeichneten Bereich der beiden Karosserie-Elemente 5 und 10 vorliegt. Wie man der Fig.5 entnimmt, bilden die Kunststoffmäntel 522 und 1022 um die Schaumstoffkerne 521 bzw. 1021 der beiden Karosserie-Elemente 5 und 10 im engeren Bereich VI um die Klebfuge F gewissermassen einen I- bzw. Doppel-T-Träger, welcher dem ganzen Gefüge im Bereich der Klebstelle eine erhöhte Festigkeit und Steifigkeit verleiht. Die Klebstellen an den einzelnen Karosserie-Elementen sind also nicht, wie sonst vielfach der Fall, die Schwachstellen des Gefüges, sondern bilden bei entsprechender erfindungsgemässer Ausbildung eine festigkeitserhöhende Struktur, die sich vorteilhaft in die Gesamtkonstruktion einbeziehen lässt. So ist es nach einem weiteren wichtigen Aspekt der Erfindung möglich und vorteilhaft, die Trennlinien T zwischen den einzelnen Karosserie-Elementen in Zonen erhöhten Festigkeitsbedarfs oder erhöhten Impaktrisikos (z.B. im Frontbereich des Fahrzeugs) zu legen bzw. in solchen Zonen mehrere Trennlinien vorzusehen.

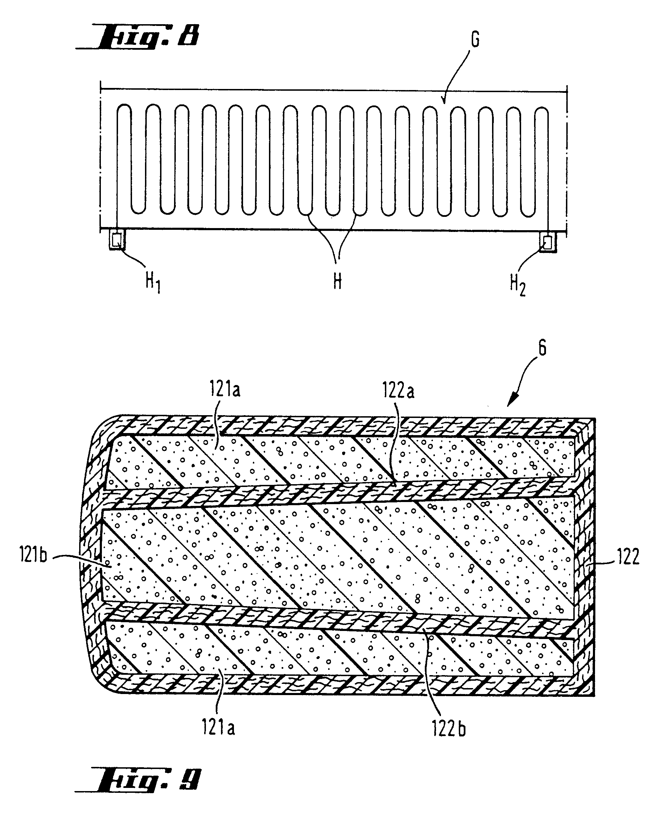

Fig.6 zeigt einen Schnitt durch eine Klebverbindung von zwei relativ dünnwandigen Karosserie-Elementen 16 und 17, welche im Bereich ihrer Klebstelle mit einer Wandverdickung 16a bzw. 17a versehen sind. Fig.7 zeigt einen Schnitt durch eine Klebverbindung eines dünnwandigen Karosserie-Elements 18 und eines dickwandigen Karosserie-Elements 19, wobei das dünnwandige Karosserie-Element 18 im Bereich der Klebstelle mit einem Klebeflansch 18a versehen ist. Die Karosserie-Elemente 16-19 haben keine Entsprechung in Fig.1 und dienen lediglich zur Illustration der verschiedenen Ausbildungsmöglichkeiten der Klebverbindung zwischen zwei Karosserie-Elementen.

Das Ablageelement 13 ist im vorliegenden Fall das einzige im Inneren der Karosserie K angeordnete Element. Es erstreckt sich über die gesamte innere Breite der Karosserie und ist mit der Bodenwanne 1 und den beiden vorderen Seitenelementen 2 und 3 klebverbunden. Das Ablageelement 13 trägt somit ebenfalls zur Versteifung bzw. Festigkeit der Karosserie bei. In analoger Weise können andere Einbauten wie Konsolen etc. in die Gesamtkonstruktion als festigkeitserhöhende Elemente einbezogen sein.

Die beiden Türen 14 und 15 sind in an sich bekannter Weise als Schiebetüren ausgebildet. Sie sind in je einer am Dachelement 12 integral ausgebildeten Laufschiene 12a aufgehängt und am Einstieg 1a der Bodenwanne 1 in zwei nicht dargestellten Schienen geführt.

Um die erforderliche Festigkeit der Karosserie (Crash-Festigkeit) zu erreichen, sind diejenigen Karosserie-Elemente, die in Zonen erhöhter Beanspruchung bzw. erhöhten Impaktrisikos liegen, besonders dickwandig mit einem Schaumstoffkern erhöhter Dicke ausgebildet. Die so verstärkt ausgebildeten Karosserie-Elemente sind insbesondere der Stossfänger 6, das Frontelement 7 und die beiden vorderen Seitenelemente 2 und 3. Durch die Dickwandigkeit dieser Karosserie-Elemente und deren entsprechend grossflächige Verbindung bzw. Verklebung wird eine gute Schockabsorption erreicht, die bei frontalem oder schräg von vorne erfolgendem Impakt eine Deformation der eigentlichen Fahrgastzelle weitestgehend verhindert. Um auch einen Schutz gegen seitlichen Impakt zu erreichen, können die seitlichen Karosserie-Elemente vorzugsweise etwa in der Ebene der grössten horizontalen Ausdehnung der Karosserie mit einem Verstärkungswulst versehen sein, in dessen Bereich die Karosserie-Elemente einen besonders dicken Schaumstoffkern aufweisen. In Fig.1 ist ein solcher Verstärkungswulst 14b bzw. 2b im Bereich der Schiebetür 14 und des vorderen Seitenteils 2 erkennbar. Der Verstärkungswulst kann sich vorzugsweise in Form eines im wesentlichen geschlossenen Sicherheitsgürtels rings um die gesamte Karosserie erstrecken und muss nicht unbedingt sichtbar sein. Eine Erhöhung der Festigkeit der einzelnen Karosserie-Elemente in Zonen erhöhten Festigkeitsbedarfs oder erhöhten Impaktrisikos kann selbstverständlich auch oder zusätzlich auch durch entsprechende Anordnung und Bemessung der Verstärkungsfasern in der Ummantelung des Schaumstoffkerns erreicht werden.

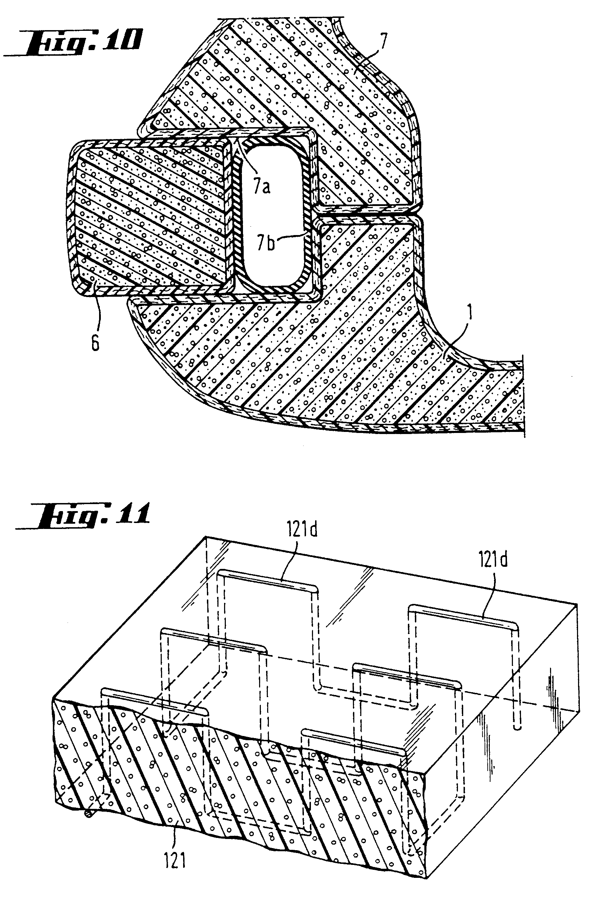

Eine weitere vorteilhafte Ausgestaltung der impaktgefährdeten Zonen der Karosserie, hier z.B. der Frontpartie, ist in Figur 10 dargestellt. Hierbei bilden der vordere Teil der Bodenwanne 1 und das an die Bodenwanne anschliessende Frontelement 7 einen Kanal 7a, welcher den Stossfänger 6 aufnimmt. Der Stossfänger 6 ist nicht vollständig innerhalb des Kanals 7a angeordnet, sondern ragt aus der Vorderfläche der Karosserie heraus. Zwischen Stossfänger 6 und dem Boden (der Rückwand) des Kanals 7a ist ein elastisches Stützelement 7b z.B. in Form eines aufgeblasenen Luftsacks angeordnet, welches den Stossfänger in seiner Position hält. Der Stossfänger 6 ist somit federnd abgestützt, wodurch die Stossabsorptionsfähigkeit des ganzen Gebildes weiter erhöht wird. Selbstverständlich könnte anstelle des Luftsacks auch ein anderes elastisch oder plastisch verformbares Stützelement 7b vorgesehen sein. In analoger Weise könnte eine ähnliche Konstruktion z.B. auch am Heck und/oder an den Seitenwänden der Karosserie vorgesehen sein.

Als Verstärkungsfasern für die Karosserie-Elemente kommen alle herkömmlichen Fasern wie z.B. Glasfasern unterschiedlichster Qualitätsstufen, Kohlefasern und andere hochfeste Kunstfasern (z.B. Aramid-Fasern) in Frage. Gemäss einem weiteren Gedanken der Erfindung können aber auch, zumindest teilweise, Naturfasern wie z.B. Jute oder Kokosfasern zur Verwendung gelangen. Diese Fasern haben den Vorteil, dass sie verrotten, d.h. abbaubar sind und dass daher mit solchen Fasern erstellte Fahrzeuge bzw. deren Wracks die Umwelt weniger belasten.

Gemäss einem weiteren wichtigen Gedanken der Erfindung erfolgt die Aufteilung der Karosserie in einzelne Elemente unter anderem auch nach dem Gesichtspunkt, dass sich besonders impaktgefährdete Karosserie-Elemente im Beschädigungsfall relativ leicht auswechseln lassen. Insbesondere betrifft dies die Frontpartie der Karosserie. Wenn die Frontpartie in eine Reihe kleinerer Elemente aufgeteilt ist, können diese ohne grosse Kosten ausgewechselt werden. Gemäss einem weiteren wichtigen Aspekt der Erfindung können in die Klebfugen zwischen den einzelnen Karosserie-Elementen elektrische Heizdrähte integriert sein, welche im Bedarfsfall an eine Spannungsquelle angeschlossen werden können, um den die betreffenden beiden Karosserie-Elemente verbindenden Klebstoff durch Wärmeeinwirkung zu erweichen, so dass die beiden Karosserie-Elemente ohne grossen Aufwand wieder auseinandergenommen werden können. Eine derartige Lösung von Klebverbindungen ist an sich z.B. bei verklebten Kunststoff-Rohrleitungen (Pipelines) oder im Flugzeugbau (z.B. US-A-5 100 494) bekannt und bedarf deshalb als solche keiner weiteren Erläuterungen. Es versteht sich, dass dieses Verfahren Klebstoffe voraussetzt, die durch Wärmeeinwirkung erweichen und ihre Klebwirkung in ausreichendem Masse verlieren. Klebstoffe auf Epoxidharzbasis sind in der Regel dazu geeignet. Weitere geeignete Klebstoffe sind in der schon genannten US-A-5 100 494 angeführt. Fig. 8 zeigt eine Draufsicht auf einen Ausschnitt einer Klebfläche G eines Karosserie-Elements mit einem integrierten Heizdraht H und zwei Anschlüssen H1 und H2 für eine elektrische Heizstromquelle. Die elektrischen Heizdrähte oder vergleichbare Heizelemente können aber nicht nur zum Lösen der Klebverbindungen eingesetzt werden, sondern gemäss einem weiteren wichtigen Aspekt der Erfindung auch dazu benutzt werden, eine raschere Abbindung des Klebers beim Verkleben der einzelnen Karosserie-Elemente zu erreichen. Dadurch kann die Herstellungsdauer für ein erfindungsgemässes Leichtbaufahrzeug nochmals erheblich reduziert werden. Selbstverständlich muss die Temperatur in der Klebfuge dabei entsprechend gewählt werden; dies ist jedoch für den Fachmann völlig selbstverständlich.

Die diversen Scheiben der Karosserie sind alle fest eingeklebt und unbeweglich. Sie sind auf unterschiedliche Art montiert. Die vorderen und hinteren Seitenelemente 2, 3, 4 und 5 sowie die beiden Schiebetüren 14 und 15 bilden selbst je einen geschlossenen Scheibenrahmen, in den die Scheiben 2a, 3a, 4a, 5a, 14a und 15a direkt eingeklebt sind. Analoges gilt auch für das Frontelement 7, in das die Frontabdeckung 8 direkt eingeklebt ist. Bei der Windschutzscheibe 9a ist dies jedoch anders. Hier bilden die beiden vorderen Seitenelemente 2 und 3, das Frontelement 7 und das Dachelement 12 zusammen einen Scheibenrahmen, in den die Windschutzscheibe 9a eingeklebt ist. Nochmal anders ist das Problem bei der Heckscheibe 11a gelöst. Hier ist ein eigenes rahmenförmiges Heckscheibenelement 11 vorgesehen, das die Heckscheibe 11a aufnimmt und das seinerseits in das Heckelement 10 eingeklebt ist.

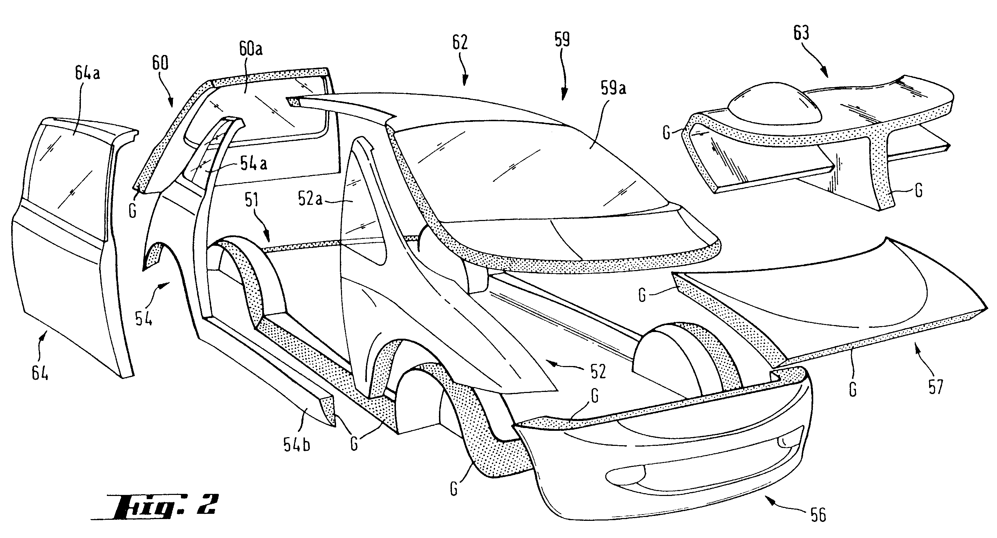

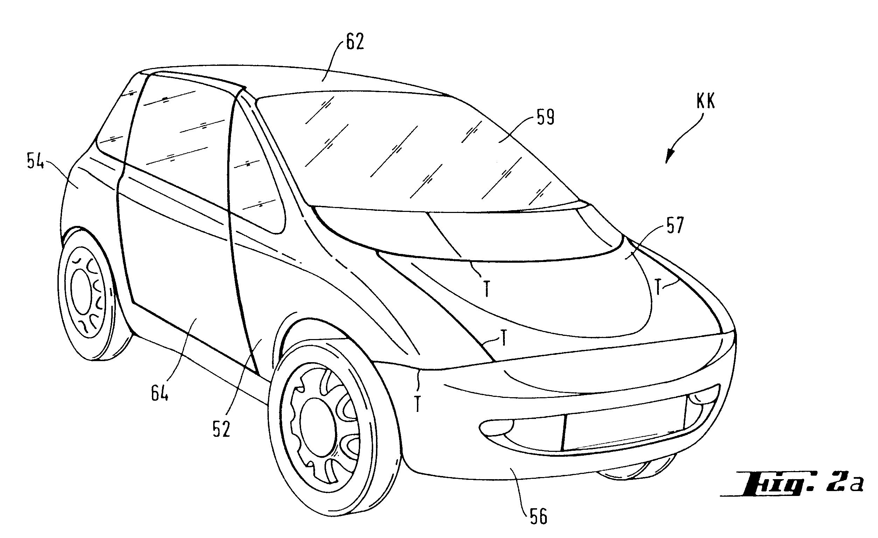

In Fig.2 ist ein anderes Ausführungsbeispiel der Karosserie eines erfindungsgemässen Leichtbaufahrzeugs in explodierter Darstellung gezeigt. Die als Ganzes mit KK bezeichnete Karosserie besteht aus einer Bodenwanne 51, zwei vorderen Seitenelementen 52 mit eingeklebten Seitenscheiben 52a, zwei hinteren Seitenelementen 54 mit integriertem Einstieg 54b, einem Stossfänger 56, einem Frontelement 57, einem Frontscheibenelement 59 mit eingeklebter Windschutzscheibe 59a, einem (hier mit dem Frontscheibenelement integralen) Dachelement 62, einem Heckelement 60 mit eingeklebter Heckscheibe 60a, zwei Schiebetüren 64 mit eingeklebten Seitenscheiben 64a und einem Ablage-Konsolenelement 63, das in analoger Weise wie bei Fig.1 im Inneren der Karosserie KK angeordnet ist und eine Querversteifung derselben bildet. Die Aufteilung der Karosserie KK in einzelne Karosserie-Elemente ist hier etwas anders gewählt als beim Ausführungsbeispiel nach Fig.1. Besonders gut erkennbar sind die relativ dickwandige Ausführung der einzelnen Karosserie-Elemente und die verhältnismässig breiten Stoss- bzw. Klebeflächen G der Karosserie-Elemente. Die Fig.2a zeigt ein mit der Karosserie KK der Fig.2 ausgestattes Leichtbaufahrzeug, wobei die erkennbaren Trennlinien zwischen den einzelnen Karosserie-Elementen wiederum mit T bezeichnet sind.

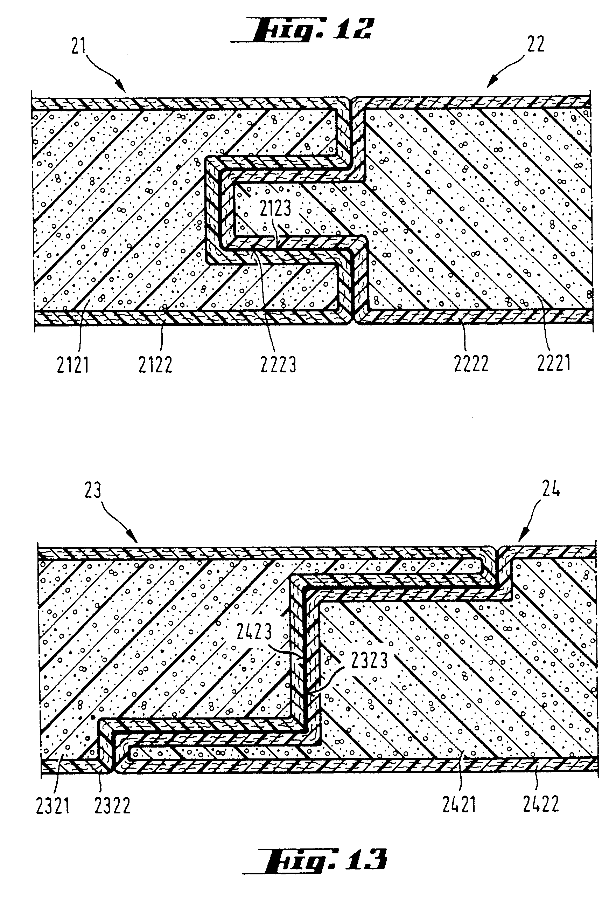

In den vorstehend beschriebenen Ausführungsbeispielen sind die einzelnen Karosserie-Elemente jeweils über den gesamten Bereich ihrer Stoss- bzw. Grenzflächen miteinander verklebt. Es versteht sich jedoch, dass die Klebverbindung sich auch auf kleinere Flächenbereiche beschränken oder auch nur punktweise ausgebildet sein kann. Ferner kann zusätzlich auch noch eine Verbindung durch Formschluss vorgesehen sein, wobei die miteinander in gegenseitigem Eingriff stehenden Grenzflächen der jeweils aneinandergrenzenden Karosserie-Elemente entsprechend komplementär geformt sind (vgl. Figuren 12 und 13). Ferner kann zumindest bei einigen Karosserie-Elementen, beispielsweise etwa den Einbauten im Inneren der Fahrgastzelle, die Verklebung auch ganz entfallen und durch herkömmliche mechanische Verbindungsmittel, beispielsweise Bolzen, Schrauben oder Steckverbindungen ersetzt sein. Auch müssen die Grenzflächen nicht unbedingt geschlossen verlaufen (bandförmig sein), sondern können durchaus auch abgestuft oder ähnlich diskontinuierlich ausgebildet sein. Wesentlich ist nicht die Art der gegenseitigen Verankerung, sondern die grossflächige Verbindung auf Stoss, welche bei entsprechender Anordnung der Stoss- bzw. Grenzflächen eine ideale Kraftüberleitung von einem zum anderen Karosserie-Element ermöglicht. In Fig. 12 ist eine beispielsweise Realisierungsform einer formschlüssigen Verbindung skizziert. Die beiden zu verbindenden Karosserie-Elemente 21 und 22 sind mit Schaumstoffkernen 2121 und 2221 sowie Kunststoffmänteln 2122 und 2222 versehen und besitzen eine Nut 2123 bzw. Feder 2223, welche im zusammengefügten Zustand der beiden Karosserie-Elemente ineinandergreifen. Analog ist in Fig. 13 eine weitere Realisierungsform skizziert, wobei zwei Karosserie-Elemente 23 und 24 mit Schaumstoffkernen 2321 und 2421 sowie Kunststoffmänteln 2322 und 2422 komplementär abgestuft ausgebildete Grenzbereiche 2323 und 2423 aufweisen, die formschlüssig ineinandergreifen und miteinander wenigstens in Teilbereichen verklebt sind. Durch die abgestufte Ausbildung wird u.a. eine gegenseitige Führung der beiden miteinander verbundenen Karosserie-Elemente erreicht.

Der Schaumstoffkern der einzelnen Karosserie-Elemente kann, wie in Fig. 11 dargestellt, auch noch mittels z.B. Glasfasern verstärkt sein, wobei die Faserstränge 121d den Schaumstoffkern wie eine weitmaschige Heftnaht durchsetzen und die Oberfläche des Schaumstoffkerns gewissermassen in kleine Einzelzellen unterteilen ("Steppnaht","Versteppung"). Auf diese Weise wird verhindert, dass sich eventuelle lokale Beschädigungen der Oberfläche des fertigen Karosserie-Elements grossflächig ausbreiten und die zu beiden Seiten des Schaumstoffkerns befindlichen Mantelschichten gut miteinander verbunden werden. Die Führung der Faserstränge 121d (also gewissermassen das Muster der "Versteppung") kann selbstverständlich auf verschiedenste Weise gewählt und den jeweiligen Bedürfnissen angepasst werden.

Der erfindungsgemässe Aufbau der Karosserie-Elemente als Kastenstruktur mit relativ dicken Schaumstoffkern hat neben den schon erwähnten konstruktiven Vorzügen noch den zusätzlichen Vorteil einer hohen Wärmedämmung bzw. Wärmeisolaton. Dadurch kann der Energieverbrauch eines solchen Fahrzeugs für die Heizung und insbesondere die Kühlung des Fahrgastraums extrem reduziert werden.

## Patentansprüche

1. Leichtbaufahrzeug mit einer selbsttragenden Karosserie (K) aus Kunststoff, welche aus vorgefertigten, formstabilen Karosserie-Elementen (1-13) zusammengesetzt ist, die grossflächige Grenzflächen (G) zu den jeweils benachbarten Karosserie-Elementen aufweisen und grossflächig auf Stoss jeweils nur im Bereich ihrer Grenzflächen (G) untereinander verbunden sind, wobei ausserhalb der Grenzflächen keine diese beidseits übergreifenden Auflaminierungen vorhanden sind, dadurch gekennzeichnet, dass die Karosserie aus mehr als zwei Karosserie-Elementen (1-13) zusammengesetzt ist, dass die Karosserie-Elemente (1-13) aus faserverstärktem Kunststoff bestehen und dass auch Karosserie-Einbauten (13) wie Armaturenbrett, Ablagen, Konsolen etc. auf Stoss grossflächig mit den übrigen Karosserie-Elementen (1-12) und ggf. untereinander verbunden und so geformt bzw. angeordnet sind, dass sie festigkeitserhöhend auf die Gesamtkarosserie (K) wirken.

2. Fahrzeug nach Anspruch 1, dadurch gekennzeichnet, dass die vorgefertigten formstabilen Karosserie-Elemente (1-13) jeweils zumindest in der Nähe ihrer mit einem benachbarten Karosserie-Element verbundenen Grenzflächen (G) eine Kastenstruktur mit einem Schaumstoffkern (121) und einem vorzugsweise faserverstärkten Kunststoffmantel (122) aufweisen.

3. Fahrzeug nach Anspruch 2, dadurch gekennzeichnet, dass relativ dünnwandige Karosserie-Elemente (16-18) im Grenzbereich zu einem benachbarten Karosserie-Element eine Wandverdickung (16a, 17a) oder einen Klebeflansch (18a) aufweisen.

4. Fahrzeug nach Anspruch 2 oder 3, dadurch gekennzeichnet, dass der Kunststoffmantel (122) der Karosserie-Elemente (1-13) aus einem vorzugsweise faserverstärkten expandierten Kunststoff besteht.

5. Fahrzeug nach einem der vorangehenden Ansprüche, dadurch gekennzeichnet, dass die miteinander verbundenen, vorzugsweise verklebten Grenzbereiche (G) der Karosserie-Elemente (1-13) als festigkeitserhöhende Struktur, insbesondere in Form eines T- oder I-Trägers ausgebildet sind.

6. Fahrzeug nach einem der vorangehenden Ansprüche, dadurch gekennzeichnet, dass die miteinander verbundenen, vorzugsweise verklebten Grenzflächen (G) benachbarter Karosserie-Elemente (1-13) in Zonen erhöhten Festigkeitsbedarfs und/oder erhöhten Impaktrisikos angeordnet sind.

7. Fahrzeug nach einem der vorangehenden Ansprüche, dadurch gekennzeichnet, dass die Karosserie-Elemente (1-13) in Zonen erhöhten Impaktrisikos als relativ dickwandige Kastenstruktur mit einem Schaumstoffkern (121) erhöhter Dicke ausgebildet sind.

8. Fahrzeug nach einem der vorangehenden Ansprüche, dadurch gekennzeichnet, dass die Karosserie (K) im wesentlichen in der Ebene ihrer grössten horizontalen Ausdehnung mit einem ringsumlaufenden, vorzugsweise geschlossenen Sicherheitsgürtel (2b, 14b) ausgebildet ist, der vorzugsweise durch eine in seinem Bereich erhöhte Wandstärke der Karosserie-Elemente gebildet ist.

9. Fahrzeug nach einem der vorangehenden Ansprüche, dadurch gekennzeichnet, dass in Karosseriezonen erhöhten Impaktrisikos befindliche Karosserie-Elemente (1-13) auswechselbar ausgebildet sind.

10. Fahrzeug nach einem der vorangehenden Ansprüche, dadurch gekennzeichnet, dass die Karosserie-Elemente (1-13) wärmedämmend aufgebaut sind.

11. Fahrzeug nach einen der vorangehenden Ansprüche, dadurch gekennzeichnet, dass die Verbindung zwischen den einzelnen Karosserie-Elementen (1-13) teilweise durch Formschluss erfolgt.

12. Fahrzeug nach einem der vorangehenden Ansprüche, dadurch gekennzeichnet, dass in den Klebfügen (F) zwischen den miteinander verklebten Karosserie-Elementen (1-13) elektrische Heizdrähte (H) angeordnet sind, welche durch Beaufschlagung mit elektrischem Strom eine Lösung der Klebverbindung ermöglichen.

13. Fahrzeug nach einem der vorangehenden Ansprüche, dadurch gekennzeichnet, dass der Schaumstoffkern der Karosserie-Elemente mittels ihn im wesentlichen nach Art einer Steppnaht durchsetzender Faserstränge verstärkt ist.

14. Selbsttragende Karosserie aus faserverstärktem Kunststoff für ein Leichtbaufahrzeug gemäss einem der vorangehenden Ansprüche.

## Claims

1. A lightweight vehicle having a self-supporting body (K) of fibre-reinforced plastics, which body is composed of prefabricated dimensionally stable body elements (1-13), said body elements having boundary surfaces (G) of large surface area with the respectively adjacent body elements and being joined to one another in abutting relationship over a large surface area only in the region of their boundary surfaces (G), whereby outside said boundary surfaces there is no lamination overlapping them on both sides, characterized in that the body is composed of more than two body elements (1-13), in that the body elements consist of fiber-reinforced plastics and in that built-in parts (13) of the body, such as the instrument panel, storage elements, consoles, etc., are joined to the remaining body elements (1-12) and, if required, to one another also in abutting relationship over a large surface area and are also so shaped and arranged that they increase the strength of the entire body (K).

2. A vehicle according to claim 1, characterized in that the prefabricated dimensionally stable body elements (1-13) each have, at least in the vicinity of their boundary surfaces (G) which are joined to an adjacent body element, a box structure comprising a cellular core (121) and a plastics sheath (122) which is preferably fibre-reinforced.

3. A vehicle according to claim 2, characterized in that relatively thin-walled body elements (16-18) have, in the boundary region with an adjacent body element, a wall-thickening (16a, 17a) or an adhesion flange (18a).

4. A vehicle according to claim 2 or claim 3, characterized in that the plastics sheath (122) of the body elements (1-13) consists of a preferably fibre-reinforced expanded plastics material.

5. A vehicle according to any one of the preceding claims, characterized in that the boundary regions (G) of the body elements (1-13), which boundary regions are joined to one another, preferably adhesively, are in the form of a structure that increases the strength, especially in the form of a T-shaped or I-shaped support.

6. A vehicle according to any one of the preceding claims, characterized in that the boundary surfaces (G) of adjacent body elements (1-13), which boundary surfaces are joined to one another, preferably adhesively, are arranged in zones that are in greater need of strength and/or that are at greater risk of impact.

7. A vehicle according to any one of the preceding claims, characterized in that, in zones that are at greater risk of impact, the body elements (1-13) are in the form of relatively thick-walled box structures having a cellular core (121) of increased thickness.

8. A vehicle according to any one of the preceding claims, characterized in that the body (K) is constructed to have, substantially in the plane of its greatest horizontal extent, a preferably closed safety belt (2b, 14b) running all the way round, which is formed preferably by an increased wall-thickness of the body elements in the region of the belt.

9. A vehicle according to any one of the preceding claims, characterized in that body elements (1-13) in body zones of encreased risk of impact are constructed such as to be replaceable.

10. A vehicle according to any one of the preceding claims, characterized in that the body elements (1-13) are of an especially thermally protecting construction.

11. A vehicle according to any one of the preceding claims, characterized in that the join between the individual body elements (1-13) is made in some cases by positive connection.

12. A vehicle according to any one of the preceding claims, characterized in that there are arranged in the bonds (F) between the body elements (1-13) that are adhesively joined to one another electric heating wires (H) which enable the adhesive join to be loosened when an electric current is passed through the wires.

13. A vehicle according to any one of the preceding claims, characterized in that the cellular core of the body elements is reinforced by means of fibre skeins which pass through the core essentially in the manner of a quilting stitch.

14. A self-supporting body of fibre-reinforced plastics for a lightweight vehicle according to any one of the preceding claims.

## Revendications

1. Véhicule de construction légère avec une carrosserie autoportante (K) en matière synthétique. Cette carrosserie se compose d'éléments stables préfabriqués (1-13), lesquels présentent de larges surfaces de contact (G) vers les éléments voisins de carrosserie et ne sont reliés ensemble par joints que dans le secteur de leurs surfaces de contact. En dehors de ces surfaces de contact, les éléments de carrosserie ne présentent toutefois aucun de ces rebords dépassant des deux côtés. Le véhicule est caractérisé par une carrosserie se composant de plus de deux éléments (1-13) de carrosserie, lesquels éléments (1-13) sont composés de matière synthétique renforcée de fibres. Les aménagements dans la carrosserie, telle que tableau d'armature, dépôt, consoles, etc. sont reliés par joints sur une large surface avec les autres éléments de carrosserie et, le cas échéant, entre eux, et sont conçus et disposés de manière qu'ils aient un effet renforçant la finition de l'ensemble de la carrosserie (K).

2. Véhicule selon prétention 1, caractérisé par le fait que les éléments stables préfabriqués de carrosserie (1-13) présentent chacun au moins à proximité de leur surface de contact (G) reliée à élément voisin de carrosserie, une structure caisson avec un noyau de mousse (121) et un manteau (122) de préférence en matière synthétique renforcée de fibres.

3. Véhicule selon prétention 2, caractérisé par le fait que des éléments de carrosserie relativement minces (16-18) présentent sur leurs bordures vers des éléments voisins de carrosserie un épaississement de leurs parois (16a-17a) ou une bride de raccord (18a).

4. Véhicule selon prétentions 2 ou 3, caractérisé par le fait que le manteau de matière synthétique (122) des éléments de carrosserie (1-13) se compose de préférence de matière synthétique expansée renforcée de fibres.

5. Véhicule selon une des prétentions précédentes, caractérisé par le fait que les bordures (G) des éléments de carrosserie (1-13) reliées ensembles, de préférence collées, sont conçues pour renforcer la structure, en particulier sous forme de porteurs en T ou I.

6. Véhicule selon une des prétentions précédentes, caractérisé par le fait que les bordures (G) des éléments de carrosserie (1-13) reliées ensembles, de préférence collées, sont disposées dans les zones présentant des exigences élevées de résistante et/ou un risque d'impact plus élevé.

7. Véhicule selon une des prétentions précédentes, caractérisé par le fait que les éléments de carrosserie (1-13) dans les zones avec un risque d'impact plus élevé présentent une épaisseur renforcée par un noyau de mousse (121) dans une structure caisson aux parois relativement épaisses.

8. Véhicule selon une des prétentions précédentes, caractérisé par le fait que la carrosserie (K), essentiellement au niveau de son extension horizontale maximale, est formée d'une ceinture de sécurité (2b, 14b) sur tout son tour, et de préférence fermée. Cette ceinture de sécurité est formée de préférence par des parois renforcées des éléments de carrosserie dans son secteur.

9. Véhicule selon une des prétentions précédentes, caractérisé par le fait que les éléments de carrosserie (1-13) des zones de carrosserie avec un risque d'impact plus élevé peuvent être remplacés.

10. Véhicule selon une des prétentions précédentes, caractérisé par le fait que les éléments de carrosserie (1-13) sont conçus pour agir comme isolation thermique.

11. Véhicule selon une des prétentions précédentes, caractérisé par le fait que le raccord des différents éléments de carrosserie (1-13) se fait en partie par fermeture de profil.

12. Véhicule selon une des prétentions précédentes, caractérisé par le fait que des fils électriques chauffants (H) sont disposés dans les fentes de reliure (F) entre les éléments de carrosserie (1-13) collés ensemble. Ces fils permettent, une fois alimentés en courant électrique, la solution de la reliure industrielle.

13. Véhicule selon les prétentions précédentes, caractérisé par le fait que le noyau de mousse des éléments de carrosserie est renforcé en son centre essentiellement par des cordons de fibres de la forme d'une couture piquée.

14. Carrosserie autoportante en matière synthétique renforcée de fibres pour un véhicule de construction légère selon une des prétentions précédentes.
